# EUROPEAN PATENT APPLICATION

(11) **EP 0 582 418 A2**
(43) Date of publication of application: **09.02.1994**
(21) Application number: 93305886.9
(22) Date of filing: 26.07.1993
(51) Int. Cl.: H04Q 1/30

(54) **Signalling network management**

(30) Priority: 06.08.1992 GB 9216685
(71) Applicant: GPT LIMITED, Coventry, CV3 1HJ (GB)
(72) Inventor: Skinner, Ian John, Wimborne Dorset BH21 3QU (GB); Blackwell, Christopher George Arthur, Poole , Dorset BH18 9JH (GB)
(74) Representative: Branfield, Henry Anthony

(57) **Abstract**

The International Telegraph and Telephone Consultative Committee Blue Book recommendations Q.700-Q.716 describe the functionality of C7 signalling in terms of certain features and appropriate data structures.

In a network management system incorporating C7 signalling, additional data structures of routing span identifying an association between a signalling link set and route assignment which associates a routing span with a signalling route are provided.

## Description

The present invention relates to the management of a C7 telecommunications signalling network.

The International Telegraph and Telephone Consultative Committee (CCITT) Blue Book recommendations Q.700-Q.716 describe the functionality of C7 signalling in terms of these features and appropriate data structures:

Signalling point - a node in a signalling network which either originates and receives signalling messages, or transfers them from one signalling link to another, or both.

Signalling link - a transmission means between signalling points, used for transfer of signalling messages.

Signalling link set - a set of one or more signalling links directly connecting two signalling points.

Signalling route - a predetermined path described by a succession of signalling points, that may be traversed by signalling messages directed by an originating signalling point towards a specific destination signalling point.

Signalling route set - a set of one or more routes which may be used between the same originating and destination signalling points.

Signalling point codes - codes unique within the network which are allocated to a signalling point as an address.

Analysis of the components described above shows that in general they map neatly onto a real network and consequently can be modelled as defined by CCITT. The exceptions are "signalling route" and to a lesser extent by implication "signalling route set".

These two terms provide a useful means of describing the principles of C7 signalling, but become very complicated when applied to a real network, particularly in terms of network management.

This is largely because, when the principle is mapped onto a network, there is a great deal of interdependence between them.

According to the present invention there is provided a CCITT network management system incorporating C7 signalling, further comprising the additional data structures of routing span and route assignment and a modified signalling route data structure.

The present invention will now be described, by way of example, with reference to the accompanying drawings, in which:
Figure 1 is an example of a simple network;
Figure 2 is the network shown in Figure 1 with the addition of a further signalling point and link.

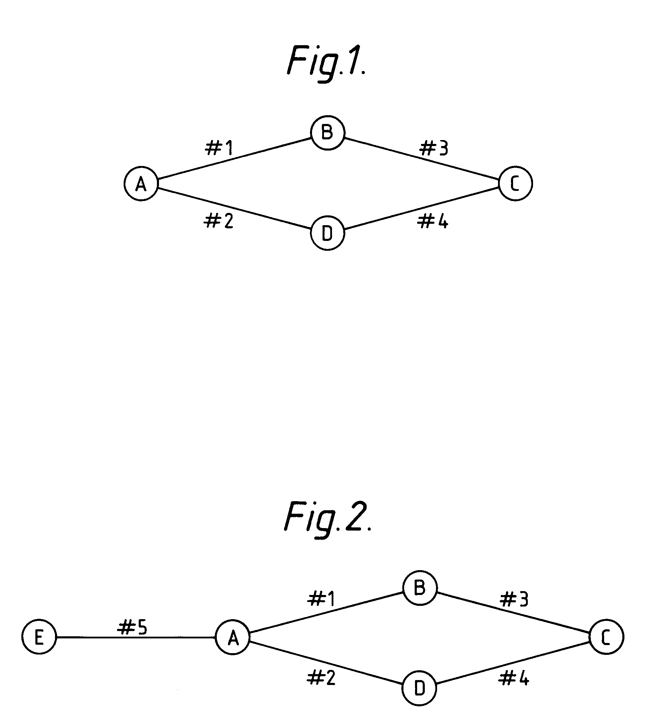

For example, considering the network shown in Figure 1, then there is a signalling route set from signalling point A to signalling point C.

There are two signalling routes within the route set;
From originating signalling point A towards destination signalling point C, using signalling link set 1 between signalling point A and signalling point B, followed by signalling link set 3 between signalling point B and signalling point C;
From originating signalling point A towards destination signalling point C, using signalling link set 2 between signalling point A and signalling point D, followed by signalling link set 4 between signalling point D and signalling point C.

Even with such a simple scenario it can be argued that route sets exist between signalling points B and C, containing a single route, and between signalling points D and C, also containing a single route.

This is because both signalling points B and D need to know how to get to signalling point C in order to support the route set AC, thus providing "incidental routes in their own right".

A network extension is now made as shown in Figure 2. By adding routing information into signalling point E, indicating that any message for a destination point C should be sent out on a link set 5, a new route set has been introduced between points E and C, with two routes EABC and EADC.

The system management must be aware of this relationship inheritance, because a failure on link set 3 between signalling points B and C, for example, now has an impact on route set AC and route set EC.

This concept of route inheritance must be captured by the network management system in order to reflect the true nature of the network being managed.

For this to be achieved the following data structures are proposed:
1. Signalling link set - identifies a link set in terms of a signalling sending point, a receiving signalling point and a link set ID, the link set ID allowing for more than one signalling path between the two signalling points.
   This is generally as the earlier signalling link set.
2. Routing span - identifies an association between a signalling link set and a particular destination point code. This effectively represents a routing information item for the sending signalling point. It is flexible enough to allow a signalling link to carry messages to more than one destination point code and for messages to a destination point code to be carried by more than one signalling link set.
   This is an additional data structure.
3. Signalling route - identifies a signalling route in terms of originating signalling point, destination signalling point and a route ID, the last of which differentiates between routes in a route set. There is also included a route suffix which is used to capture existing route inheritance during the life of the route. Any inherited routes are represented by an additional set of routing data, associated with the original by a common route ID, but indicated by a different route suffix.
   This is a modified data structure.
4. Route assignment - associates a routing span with a signalling route (with route suffix included in its identification). Each routing span which is associated with the signalling route has its own route assignment, with each link including a sequence number to indicate the order in which they are connected to create the complete route.

This is an additional data structure.

The use of these data structures to define the internal functionality of the system enables the recognition and capture of the inter-relationships between the signalling routes and while conforming to the principles of the Blue Book, reflects the real configuration of the managed network.

## Claims

1. An International Telegraph and Telephone Consultative Committee (CCITT) network management system incorporating C7 signalling, further comprising the additional data structures of routing span and route assignment, wherein the routing span identifies an association between a signalling link set and the route assignment associates a routing span with a signalling route.

2. A network management system as claimed in Claim 1 wherein the routing span represents a routing information item for the sending signalling point, enabling a signalling link to carry messages to more than one destination point code and messages to a destination point code to be carried by more than one signalling link set.

3. A network management system as claimed in Claim 1 or 2, wherein each routing span associated with the signalling route has its own route assignment, each link including a sequence number to indicate the order in which they are connected to create the complete route.

4. A network management system as claimed in Claim 1, 2 or 3, which includes a route suffix which is used to capture existing route inheritance during the life of the route.
